# EUROPÄISCHE PATENTSCHRIFT

(11) **EP 1 319 329 B1**
(45) Veröffentlichungstag und Bekanntmachung des Hinweises auf die Patenterteilung: **28.05.2008**
(21) Anmeldenummer: 02027026.0
(22) Anmeldetag: 03.12.2002
(51) Int. Cl.: A01B 51/02

(54) **Selbstfahrende Arbeitsmaschine für den landwirtschaftlichen Einsatz**
Automotive agricultural working machine
Machine de travail agricole automoteur

(30) Priorität: 14.12.2001 DE 20120282 U
(43) Veröffentlichungstag der Anmeldung: 18.06.2003
(73) Patentinhaber: Reuver, Hermannus S.F., 21683 Butzflethermoor (DE)
(72) Erfinder: Reuver, Hermannus S.F., 21683 Butzflethermoor (DE)
(74) Vertreter: Hansen, Jochen

(56) Entgegenhaltungen:
- EP-A- 0 987 213
- EP-A- 1 008 284
- FR-A- 2 701 800
- US-A- 3 720 047
- US-A- 4 755 102

## Beschreibung

Die Erfindung betrifft eine selbstfahrende Arbeitsmaschine für den landwirtschaftlichen Einsatz mit einem allradgetriebenem 4-Radfahrwerk

Derartige selbstfahrende Arbeitsmaschinen sind in unterschiedlichsten Ausgestaltungen bekannt.

Bei sog. landwirtschaftlichen Schleppern ist das frühere Prinzip der hinterachsangetriebenen Traktoren durch die Einführung eines Allradantriebs zwar weitergebildet, jedoch sind diese Schlepper durch die feste Anordnung der Fahrerkabine und nur einer Arbeitsgeräteaufnahme am Heck des Fahrzeugs eindeutig mit einer Vorzugsarbeitsrichtung für Vorausfahrt ausgelegt. Durch weitere Zurüstungen sind derartige Schlepper zwar auch mit anhebbaren Auslegern für weitere Arbeitsgeräte ausrüstbar, jedoch verbleiben wesentliche Anwendungsnachteile bei präzisen Anhebe-, Verteil- und Aufnahmetätigkeiten, insbesondere bei beengten Platzverhältnissen in Ställen, unter Überständen und zwischen Gebäuden.

Daher wurde als wendigeres Arbeitsgerät der sog. Hoftruck entwickelt, der häufig ebenfalls als allradgetriebenes 4-Radfahrwerk ausgebildet ist. Der Hoftruck zeichnet sich dadurch aus, daß die 4 Fahrzeugräder gleiche Größe haben und an der Frontseite ein Schnellwechselanschluß für verschiedenste Vorsatzgeräte nebst Hydraulikkupplung vorgesehen ist. Aber auch der Hoftruck besitzt nachteilig eine bevorzugte Fahrtrichtung, nämlich in Ausrichtung des Fahrers in der fest angeordneten Fahrerzelle.

In ähnlicher Ausgestaltung ist eine selbstfahrende Arbeitsmaschine von der Firma Manitou BF S.A., Frankreich, bekannt, die ein 4-Rad gelenktes, allradgetriebenes Fahrwerk mit fest angeordneter Fahrerzelle und einen teleskopierbaren Ausleger aufweist. Am freien Ende des teleskopierbaren Auslegers ist eine Schnellwechselkupplung zum Ansetzen von verschiedensten Arbeitsgeräten, bedarfsweise auch mit Hydraulikkupplung angeordnet. Diese mit "MLT-AGRI" bezeichnete selbstfahrende Arbeitsmaschine weist jedoch durch die fest angeordnete Fahrerzelle und den nur um eine horizontale Achse am Heck des Fahrzeugs schwenkbar angeordneten Auslegerarm eine bevorzugte Arbeitsrichtung auf. Der Zugriff von seitlich neben der Fahrtrichtung befindlichen Arbeitspunkten ist nicht bzw. nur durch Rangierarbeit mit dem Fahrzeug selbst erreichbar.

Darüber hinaus ist von der Firma Manitou BF S.A., Frankreich, eine selbstfahrende Arbeitsmaschine für den Baubereich bekannt, bei der im Gegensatz zur vorgenannten Maschine die Fahrerkabine und der teleskopierbare Ausleger auf einem um eine lotrechte Achse um 360° drehbaren Aufbau angeordnet ist. Diese Arbeitsmaschine erlaubt somit in beiden Fahrtrichtungen gleiche Übersichtlichkeit und Handhabbarkeit, womit eine bevorzugte Fahrtrichtung nicht mehr existiert. Ferner sind Arbeitsbereiche seitlich der Fahrtrichtung der Maschine durch den drehbaren Aufbau mit dem daran befestigten teleskopierbaren Ausleger erreichbar. Diese Arbeitsmaschine ist jedoch aufgrund der großen Fahrzeughöhe, des großen Gewichts und fehlender Arbeitsgeräteaufnahmen an Front und/oder Heck des Fahrwerks nicht für den landwirtschaftlichen Einsatz geeignet.

Aus der EP 0 987 213 A1 ist eine selbstfahrende Arbeitsmaschine für den landwirtschaftlichen Einsatz mit einem allradgetriebenen Vierradfahrwerk bekannt, das einen um eine horizontale Drehachse schwenkbaren Ausleger mit einer um eine horizontale und zum Ausleger orthogonale Achse kippbare Schnellwechselsystemaufnahme aufweist.

Die US 4,755,102 beschreibt einen Gabelstapler auf einem Vier-Radfahrwerk mit einem um eine lotrechte Achse drehbaren Aufbau. Die US 4,755,102 enthält auch einen um eine horizontale Drehachse schwenkbaren Ausleger, an dem eine Gabelladevorrichtung um eine horizontale und zum Ausleger orthogonale Achse schwenkbar angeordnet ist. Besonderes Augenmerk in der US 4,755,102 wird auf die lineare Vorschubmöglichkeit des am Ausleger angeordneten Gabelladers gerichtet.

Die FR 2 701 800 A1 betrifft lediglich eine im Stand der Technik allgemein bekannte Schnellwechselsystemaufnahme, wie sie beispielsweise auch an der Arbeitsmaschine gemäß EP 0 987 213 A1 am Ausleger vorgesehen ist. Das Neuartige an dieser Schnellwechselsystemaufnahme ist die Verwirklichung einer Verschwenkmöglichkeit um eine lotrechte Drehachse um einen sehr begrenzten Winkelbereich.

Aus der US 3,720,047 ist ein Unversialtraktor für unterschiedlichste landwirtschaftliche Aufgaben mit einem vier- oder sechsrädrigen Fahrwerk bekannt, der Arbeitsgeräteaufnahmen an Front und Heck des Fahrwerks aufweist.

Aus der EP 1 008 284 A2 ist ein teleskopierbarer Geräteanbau für einen landwirtschaftlichen Schlepper mit einer Dreipunkt-Arbeitsgeräteaufnahme bekannt. Dabei ist die Anbauschnittstelle an einem relativ kurzen Ausleger, der um eine horizontale Drehachse schwenkbar ist, teleskopierbar angebracht und am Auslegerende wiederum um eine horizontale und zum Ausleger orthogonale Achse kippbar.

Aufgabe der Erfindung ist es, eine selbstfahrende landwirtschaftliche Arbeitsmaschine mit einem schwenkbaren Ausleger anzugeben, die mit dem Ausleger auch seitlich neben der Fahrzeugfahrrichtung liegende Arbeitspunkte optimal ausgerichtet erreichen kann und gleichzeitig Schleppaufgaben erfüllen kann.

Gelöst wird diese Aufgabe durch die Merkmalskombination mit einem um eine lotrechte Achse um 360° drehbaren Aufbau mit Fahrerzelle, wobei die lotrechte Achse im Zentrum des 4-Radfahrwerks angeordnet ist, einem an dem Aufbau um eine horizontale Drehachse schwenkbaren Ausleger, wobei die horizontale Drehachse tangential zur lotrechten Drehachse des Aufbaus angeordnet ist, einer am freien Ende des Auslegers vorgesehenen, um eine horizontale und zum Ausleger orthogonale Achse kippbaren Schnellwechselsystemaufnahme für bedarfsweise ansetzbares Arbeitszubehör, wobei die Schnellwechselsystemaufnahme am freien Ende des Auslegers zusätzlich um eine lotrechte Drehachse verschwenkbar ausgebildet ist, und je einer Arbeitsgeräteaufnahme an Front und Heck des Fahrwerks.

Mit der vorgenannten Merkmalskombination wird erreicht, daß fahrtrichtungsunabhängig jederzeit die für die durchzuführende Arbeit optimale Ausrichtung der Fahrerzelle und des Auslegers gewährleistet ist. Mit dem Ausleger sind somit auch seitlich neben der Fahrzeugfahrtrichtung liegende Arbeitspunkte erreichbar. Ferner kann das an der Schnellwechselsystemaufnahme angesetzte Arbeitsgerät auch bei vom Ausleger schrägen Zugriff zu einem Objekt optimal ausgerichtet werden. Beispielsweise kann Silage mit einem Fräs- und Aufnahmegerät auch bei nicht optimaler Ausrichtung der Arbeitsmaschine planeben vom Anschnitt abgefräst werden. Wendemanöver sind weitestgehend überflüssig, da lediglich der Aufbau um 180° gedreht werden braucht. Mit der am Fahrwerk an Front und Heck vorgesehenen Arbeitsgeräteaufnahme können mit der selbstfahrenden Arbeitsmaschine zusätzlich beispielsweise Schleppaufgaben durch Anhängen entsprechender Arbeitsgeräte, beispielsweise eines Pfluges, ausgeführt werden.

Wenn der Ausleger als Teleskopausleger ausgebildet ist, ist die erreichbare Arbeitshöhe erheblich größer und/oder bei eingefahrenem Ausleger die zum Drehen des Aufbaus erforderliche lichte Breite gering zu halten.

Dadurch, daß die Arbeitsgeräteaufnahme(n) kippbar um horizontale, senkrecht zur Fahrtrichtung angeordnete Drehachsen ausgebildet sind, können anzuhebende bzw. abzusenkende Arbeitsgeräte, wie beispielsweise ein Pflug, an der Arbeitsmaschine montiert werden.

Wenn die Arbeitsgeräteaufnahme(n) einen Zapfwellenkupplungsanschluß aufweisen, können in landwirtschaftlichen Betrieben übliche mit einem Wellenantrieb versehene Anhänger, wie beispielsweise ein Silageverteiler, an der Arbeitsmaschine verwendet werden.

Dadurch, daß die Arbeitsgeräteaufnahme(n) einen Hydraulikkupplungsanschluß aufweisen, können Arbeitsgeräte mit Hydraulikantrieben an der Maschine angeschlossen werden.

Dadurch, daß das Fahrwerk zur durch die lotrechte Achse und orthogonal zur Fahrtrichtung gedachten Fläche spiegelsymmetrisch aufgebaut ist, wird eine noch weitergehende fahrtrichtungsunabhängige Funktion erreicht.

Dabei weist das Fahrwerk eine 4-Radlenkung auf, wobei bedarfsweise eine Achse in Geradeausstellung festgelegt oder durch Paralleleinstellung beider Achsen eine schräg-seitliche Bewegung ermöglicht wird. Bei Rangieraufgaben können somit mit der 4-Radlenkung minimale Wendekreise bei fahrtrichtungsunabhängiger Funktion erreicht werden. Für Straßenfahrt oder Fahrt mit Anhängelast kann die Lenkung auf eine Verstellung der jeweiligen Vorderachse beschränkt werden. Für besondere Anwendungen können beide Achsen so verstellt werden, daß das Fahrzeug schräg-seitlich im sog. Hundegang fahren kann.

Wenn im Fahrwerk ein Antriebsverbrennungsmotor mit Hydraulikpumpe zur Betätigung der über Hydraulikstellglieder zu betätigenden Verstellmöglichkeiten vorgesehen sind, wird an den jeweiligen Stellorgangen bzw. den Hydraulikanschlußkupplungen eine jederzeit abgreifbare Antriebsleistung bereit gestellt. Besonders vorteilhaft sind die Fahrmotoren jedem Einzelrad zugeordnete Hydraulikmotoren, die von der zentralen Hydraulikpumpe über eine Regel-/Steuereinheit angetrieben werden. Über die Regel-/Steuereinheit kann das Fahrzeug lastgeregelt jedem Antriebsrad eine der Traktionsfähigkeit entsprechende Antriebsleistung zugeordnet werden, womit eine Antischlupfregelung integrierbar ist. Aufwendige Übersetzungs- und Differentialgetriebe können entfallen.

Um für den Einsatz mit schweren Lasten am Ausleger und/oder großer Auslage des Auslegers einen sicheren Stand der Arbeitsmaschine zu ermöglichen, sind hydraulisch ausfahr- und absenkbare Bodenstützen am Fahrwerk vorgesehen.

Nachfolgend wird ein Ausführungsbeispiel der Erfindung anhand der beiliegenden Zeichnungen detailliert beschrieben.

Darin zeigt:
- Fig. 1: in schematischer Draufsicht eine erfindungsgemäße selbstfahrende Arbeitsmaschine und
- Fig. 2: in schematischer Seitenansicht die in Fig. 1 dargestellte Arbeitsmaschine.

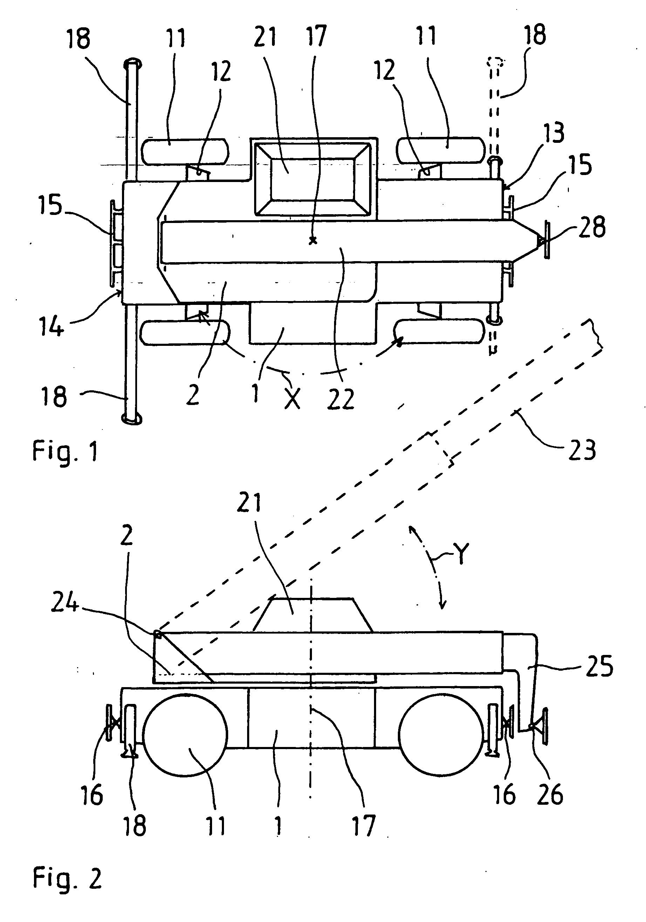

In Fig. 1 ist eine selbstfahrende Arbeitsmaschine in Draufsicht dargestellt. Die Arbeitsmaschine weist ein Fahrwerkchassis 1 auf, an dem 4 gleich große Räder 11 aufgehängt sind. Alle 4 Räder 11 sind über nicht dargestellte Antriebsvorrichtungen angetrieben und über Lenkanlagen 12 lenkbar.

An Front 13 und Heck 14 des Fahrwerkchassis 1 ist jeweils eine standardisierte Arbeitsgeräteaufnahme 15 zum bedarfsweisen Ankuppeln von landwirschaftlichen Arbeitsgeräten angeordnet. Die Arbeitsgeräteaufnahmen 15 sind, wie in der Seitenansicht in Fig. 2 erkennbar, um horizontal und senkrecht zur Fahrtrichtung angeordnete Drehachsen 16 schwenkbar mittels nicht dargestellter Hydrauliktriebe ausgebildet. Ferner sind bevorzugt an den Arbeitsgeräteaufnahmen 15 Zapfwellenkupplungsanschlüsse und Hydraulikkupplungsanschlüsse vorgesehen.

Im Zentrum des Fahrwerkchassis 1 ist eine lotrechte Drehachse 17 angeordnet, um die ein Aufbau 2 der Arbeitsmaschine um 360°, entsprechend dem in Fig. 1 dargestellten Drehkreis X, drehbar angeordnet ist. Der Aufbau 2 weist eine Fahrerzelle 21 und einen Ausleger 22 auf. In der Fahrerzelle 21 sind die Betätigungsvorrichtungen für das Fahrzeug zusammengefaßt. Der Fahrer kann von der Fahrerzelle 21 sämtliche Funktionen der selbstfahrenden Arbeitsmaschine steuern.

Der Ausleger 22 ist im dargestellten Ausführungsbeispiel einfach teleskopierbar mit einer über eine nicht dargestellte Hydraulik ausziehbaren Verlängerung 23 gemäß gestrichelter Darstellung in Fig. 2 ausgestattet. Der Ausleger 22 ist um eine horizontale und tangential zur lotrechten Drehachse 17 angeordneten Drehachse 24 in der in Fig. 2 dargestellten Schwenkrichtung Y anheb- und absenkbar.

Ferner ist am freien Ende des Auslegers 22, 23 ein gekröpftes Kopfelement 25 mit einer horizontal und parallel zur Schwenkdrehachse 24 des Auslegers 22 angeordneten Drehachse 26 angeordnet. Über diese Drehachse 26 kann eine daran angeordnete Schnellwechselsystemaufnahme 27 bei den um Schwenkrichtung Y getätigten Bewegungen des Auslegers 22, 23 durch entsprechende Ansteuerung eines nicht dargestellten Hydraulikzylinders in gleicher horizontaler Ausrichtung gehalten werden.

Ferner ist am gekröpften Kopfelement 25 eine Drehachse 28, die gewöhnlich Iotrecht ausgerichtet ist, angeordnet, um die Schnellwechselsystemaufnahme 27 unabhängig von der Ausrichtung des Auslegers 22, 23 einstellen zu können.

An der Schnellwechselsystemaufnahme 27 können verschiedene Arbeitsgeräte, beispielsweise Greifer, Silagefräser, Arbeitsbühnen, Futterverteiler etc. angekuppelt werden. Zur Bereitstellung etwaig erforderlicher Antriebsleistung ist ebenfalls ein Hydraulikkupplungsanschluß vorgesehen.

Ferner ist am Fahrwerkchassis 1 in den Bereichen der Fahrwerkfront 13 und des Fahrwerkhecks 14 hydraulisch ausfahr- und absenkbare Bodenstützen 18 vorgesehen. In dem in Fig. 1 in der Draufsicht dargestellten ausgefahrenen Zustand der Bodenstützen 18 wird die Arbeitsmaschine für Arbeiten mit großer Last und/oder mit weit ausgefahrenem Ausleger 22, 23 stabilisiert. Bevorzugt ist in der Arbeitsmaschine ein Lastsicherheitssystem integriert, um ein Überschreiten der jeweils zulässigen Gesamtlast sicher zu vermeiden.

Der Arbeitsbereich dieser selbstfahrenden Arbeitsmaschine für den landwirtschaftlichen Einsatz ist aufgrund der vielfältigen Ansetz- und Umrüstmöglichkeiten durch beidseitige Arbeitsgeräteaufnahmen 15 an Front und Heck des Fahrwerkchassis 1 und am freien Ende des Auslegers 22, 23 fast unbegrenzt. Neben den vielfältigen Möglichkeiten zum Anheben und Absenken von Lasten kann die Arbeitsmaschine auch für Schlepptätigkeiten bei der Bodenbearbeitung und der Ernte eingesetzt werden. Durch die relativ niedrige Gesamthöhe des Fahrzeugs können ebenso Ställe und Unterstände befahren werden und beispielsweise Stroh und/oder Futter in Boxenlaufställen mit entsprechend angekuppelten Arbeitsgeräten ausgebracht werden.

### Bezugszeichenliste

- 1: Fahrwerk, Fahrwerkchassis
- 11: Rad
- 12: Lenkungsanlage
- 13: Fahrwerkfront
- 14: Fahrwerkheck
- 15: Arbeitsgeräteaufnahme
- 16: Drehachse
- 17: Drehachse
- 18: Bodenstütze

- 2: Aufbau
- 21: Fahrerzelle
- 22: Ausleger
- 23: Verlängerung
- 24: Drehachse
- 25: gekröpfes Kopfelement
- 26: Drehachse
- 27: Schnellwechselsystemaufnahme
- 28: lotrechte Drehachse

- X: Drehkreis-Aufbau
- Y: Schwenkbereich-Ausleger

## Patentansprüche

1. Selbstfahrende Arbeitsmaschine für den landwirtschaftlichen Einsatz mit einem allradgetriebenem 4-Radfahrwerk (1) und einer Merkmalskombination aus
- einem um eine lotrechte Achse (17) um 360° drehbaren Aufbau (2) mit Fahrerzelle (21), wobei die lotrechte Achse (17) im Zentrum des 4-Radfahrwerks (1) angeordnet ist,
- einem an dem Aufbau (2) um eine horizontale Drehachse (24) schwenkbaren Ausleger (22), wobei die horizontale Drehachse (24) tangential zur lotrechten Drehachse (17) des Aufbaus (2) angeordnet ist,
- einer am freien Ende des Auslegers (22) vorgesehenen, um eine horizontale und zum Ausleger orthogonale Achse (26) kippbaren Schnellwechselsystemaufnahme (27) für bedarfsweise ansetzbares Arbeitszubehör, wobei die Schnellwechselsystemaufnahme (27) am freien Ende des Auslegers (22) zusätzlich um eine lotrechte Drehachse (28) verschwenkbar ausgebildet ist, und
- je einer Arbeitsgeräteaufnahme (15) an Front (13) und Heck (14) des Fahrwerks (1).

2. Selbstfahrende Arbeitsmaschine nach Anspruch 1, **dadurch gekennzeichnet, daß** der Ausleger als Teleskopausleger (22, 23) ausgebildet ist.

3. Selbstfahrende Arbeitsmaschine nach Anspruch 1 oder 2, **dadurch gekennzeichnet, daß** die Arbeitsgeräteaufnahme(n) (15) kippbar um horizontale, senkrecht zur Fahrtrichtung angeordnete Drehachsen (16) ausgebildet sind.

4. Selbstfahrende Arbeitsmaschine nach Anspruch 1, 2 oder 3, **dadurch gekennzeichnet, daß** die Arbeitsgeräteaufnahme(n) (15) einen Zapfwellenkupplungsanschluß aufweisen.

5. Selbstfahrende Arbeitsmaschine nach einem der vorangehenden Ansprüche, **dadurch gekennzeichnet, daß** die Arbeitsgeräteaufnahme(n) (15) einen Hydraulikkupplungsanschluß aufweisen.

6. Selbstfahrende Arbeitsmaschine nach einem der vorangehenden Ansprüche, **dadurch gekennzeichnet, daß** das Fahrwerk (1) zur durch die lotrechte Achse (17) und orthogonal zur Fahrtrichtung gedachten Fläche spiegelsymmetrisch aufgebaut ist.

7. Selbstfahrende Arbeitsmaschine nach einem der vorangehenden Ansprüche, **dadurch gekennzeichnet, daß** das Fahrwerk eine 4-Radlenkung (12, 12) aufweist, wobei bedarfsweise eine Achse in Geradeausstellung festgelegt oder durch Paralleleinstellung beider Achsen eine schräg-seitliche Bewegung ermöglicht wird.

8. Selbstfahrende Arbeitsmaschine nach einem der vorangehenden Ansprüche, **dadurch gekennzeichnet, daß** im Fahrwerk ein Antriebsverbrennungsmotor mit Hydraulikpumpe zur Betätigung der über Hydraulikstellglieder zu betätigenden Verstellmöglichkeiten vorgesehen sind.

9. Selbstfahrende Arbeitsmaschine nach Anspruch 8, **dadurch gekennzeichnet, daß** die Fahrmotoren jedem Einzelrad (11) zugeordnete Hydraulikmotoren sind, die von der zentralen Hydraulikpumpe über eine Regel-/Steuereinheit angetrieben werden.

10. Selbstfahrende Arbeitsmaschine nach einem der vorangehenden Ansprüche, **dadurch gekennzeichnet, daß** hydraulisch ausfahr- und absenkbare Bodenstützen (18) am Fahrwerk (1) vorgesehen sind.

## Claims

1. A self propelled work maachine for agricultural use, having a four-wheel drive chassis (1) and a feature combination of
- a superstructure (2), with driver's cabin (21), rotatable through 360° about a perpendicular axis (17), the perpendicular axis (17) being arranged in the centre of the four-wheel chassis (1),
- a cantilever arm (22) pivotable on the superstructure (2) about a horizontal rotational axis (24), the horizontal rotational axis (24) being arranged tangential to the perpendicular rotational axis (17) of the superstructure (2),
- a quick-change system receiver (27), provided at the free end of the cantilever arm (22) and tiltable about a horizontal axis (26) orthogonal to the cantilever arm, for working attachments attachable as required, the quick-change system receiver (27) at the free end of the cantilever arm (22) being additionally pivotable about a perpendicular rotational axis (28), and
- a respective implement receiver (15) at the front (13) and the rear (14) of the chassis (1).

2. A self-propelled work machine according to claim 1, **characterised in that** the cantilever arm is in the form of a telescopic cantilever arm (22, 23).

3. A self-propelled work machine according to claim 1 or 2, **characterised in that** the implement receiver(s) (15) is/are tiltable about horizontal rotational axes (16) arranged perpendicular to the direction of travel.

4. A self-propelled work machine according to claim 1, 2 or 3, **characterised in that** the implement receiver(s) (15) has/have a power take-off coupling connection.

5. A self-propelled work machine according to any one of the preceding claims, **characterised in that** the implement receiver(s) (15) has/have an hydraulic coupling connection.

6. A self-propelled work machine according to any one of the preceding claims, **characterised in that** the chassis (1) is mirror-symmetrical with regard to the notional surface which is formed by the perpendicular axis (17) and which is orthogonal to the direction of travel.

7. A self-propelled work machine according to any one of the preceding claims, **characterised in that** the chassis has 4 wheel steering (12, 12), if required an axle being fixed in a straight-ahead position or an oblique-lateral movement being made possible through parallel adjustment of both axles.

8. A self-propelled work machine according to any one of the preceding claims, **characterised in that** a driving combustion engine with an hydraulic pump for control of the adjustment possibilities to be controlled via hydraulic actuating members is provided in the chassis.

9. A self-propelled work machine according to claim 8, **characterised in that** the travel motors are hydraulic motors associated with each individual wheel (11), which hydraulic motors are driven by the central hydraulic pump via a regulating/control unit.

10. A self-propelled work machine according to any one of the preceding claims, **characterised in that** hydraulically extendible and lowerable ground supports (18) are provided on the chassis (1).

## Revendications

1. Machine de travail automotrice à usage agricole comportant un châssis (1) à quatre roues motrices et une combinaison de caractéristiques consistant en
- une structure (2) comportant une cabine conducteur (21) et pouvant tourner de 360° autour d'un axe vertical (17), l'axe vertical (17) étant disposé au centre du châssis (1) à quatre roues,
- un bras (22) prévu sur la structure (2) et pouvant pivoter autour d'un axe de rotation horizontal (24), l'axe de rotation horizontal (24) étant agencé tangentiellement à l'axe de rotation vertical (17) de la structure (2),
- une fixation (27) pour un système de changement rapide pour un accessoire de travail pouvant être monté selon les besoins, fixation prévue à l'extrémité libre du bras (22), pouvant basculer autour d'un axe (26) horizontal et orthogonal par rapport au bras, la fixation du système de changement rapide (27) prévue à l'extrémité du bras (22) étant en outre réalisée pour pouvoir pivoter autour d'un axe de rotation perpendiculaire (28), et
- une fixation (15) pour des appareils de travail, respectivement à l'avant (13) et à l'arrière (14) du châssis (1).

2. Machine de travail automotrice selon la revendication 1, **caractérisée en ce que** le bras est réalisé sous la forme d'un bras télescopique (22, 23).

3. Machine de travail automotrice selon la revendication 1 ou 2, **caractérisée en ce que** la/les fixation(s) des appareils de travail (15) sont réalisées pour pouvoir basculer autour d'un axe de rotation (16) horizontal, agencé perpendiculairement au sens de la marche.

4. Machine de travail automotrice selon la revendication 1, 2 ou 3, **caractérisée en ce que** la/les fixation(s) des appareils de travail (15) présentent un raccordement à accouplement par prise de force.

5. Machine de travail automotrice selon une des revendications précédentes, **caractérisée en ce que** la/les fixation(s) des appareils de travail présentent un raccordement à accouplement hydraulique.

6. Machine de travail automotrice selon une des revendications précédentes, **caractérisée en ce que** le châssis (1) présente une symétrie de miroir par rapport à la surface passant par l'axe vertical (17) et orthogonale au sens de la marche.

7. Machine de travail automotrice selon une des revendications précédentes, **caractérisée en ce que** le châssis présente une direction à quatre roues (12, 12), selon les besoins, un essieu pouvant être placé en position droite, ou un mouvement latéral oblique pouvant être possible par un positionnement parallèle des deux essieux.

8. Machine de travail automotrice selon une des revendications précédentes, **caractérisée en ce qu'**il est prévu dans le châssis un moteur d'entraînement à combustion interne comportant une pompe hydraulique pour l'actionnement des réglages possibles actionnables par l'intermédiaire d'organes de réglage hydrauliques.

9. Machine de travail automotrice selon la revendication 8, **caractérisée en ce que** les moteurs de traction associés à chacune des roue (11) sont des moteurs hydrauliques qui sont entraînés par la pompe hydraulique centrale par l'intermédiaire d'une unité de réglage et de commande.

10. Machine de travail automotrice selon une des revendications précédentes, **caractérisée en ce qu'**il est prévu sur le châssis (1) des appuis au sol (18) pouvant être déployés et descendus hydrauliquement.
